# EUROPEAN PATENT APPLICATION

(11) **EP 1 967 530 A1**
(43) Date of publication of application: **10.09.2008**
(21) Application number: 07004651.1
(22) Date of filing: 07.03.2007
(51) Int. Cl.: C08C 1/06, C08C 1/08, C08K 5/06, C08K 5/15, C08L 7/02

(54) **Natural rubber latex preservation**

(71) Applicant: Raffinerie Notre Dame - Orafti S.A., 4360 Oreye (BE)
(72) Inventor: Booten, Karl, 3450 Geetbets (BE); Hashim Bin Md Yatim, Amir, 40150, Shah Alam Selangor (MY); Singh, Manroshan, 36000 Teluk Intan Perak Darul Ridzuan (MY)
(74) Representative: Koster, Nico

(57) **Abstract**

A method for the preservation of natural rubber latex is disclosed which comprises adding to natural rubber latex at least one hydrophobically modified saccharide in combination with at least one conventional preservative, preferably ammonia.

The method enables increasing the stability of natural rubber latex by an economically interesting method which does not negatively affect neither subsequent conventional processing of the latex, nor the properties of shaped rubber articles manufactured from the stabilized latex.

Furthermore, preserved rubber latex is disclosed that is stabilized by the method of the invention. Also preserved non-concentrated as well as concentrated rubber latex is disclosed comprising at least one said hydrophobically modified saccharide in combination with at least one conventional preservative, preferably ammonia.

## Description

### Field of the invention

The present invention relates to a method for the preservation of natural rubber latex against coagulation and putrefaction, and to natural rubber latex preserved by said method.

### Background and prior art

Notwithstanding synthetic rubber is worldwide used in big volumes, natural rubber is remaining a very important raw material for the manufacture of various high-quality shaped rubber articles.

Natural rubber is mainly produced from latex obtained from trees of the genus Hevea. The sap (also termed latex) flowing from cuts made in the Hevea trees is collected and pooled for further processing. The latex and the pooled latex are commonly named natural rubber latex. The latex is a colloidal dispersion of rubber particles in an aqueous medium, containing usually from about 20 to about 40 % w/w, typically about 25 - 35 % w/w, rubber particles (dry rubber) and about 5% w/w non-rubber compounds, including carbohydrates, proteins, phospholipids and metal salts. The term w/w has herein the common meaning of weight on total weight.

Fresh natural rubber latex spontaneously coagulates within a few hours from its collection from the trees, a process which is non-desired because it renders further handling of the latex, such as pooling, transportation, storage and further processing, more difficult or hardly possible and hence economically non-attractive.

Spontaneous coagulation is commonly assumed to result from a microbial infection of the fresh rubber latex during its collection and handling. The time period to come to coagulation varies for different latex samples and depends from the importance of the microbial infection, the ambient temperature which influences the growth of the micro-organisms, and the colloidal stability of the latex.

Spontaneous coagulation is presumed to occur by one or more of the following mechanisms, namely: (i) that as a result of microbial growth with interaction, including fermentation, with non-rubber components of the latex, various acidic substances are formed, particularly volatile fatty acids, which decreases the pH of the latex and which in turn decreases the stability of the colloidal dispersion and leads to coagulation; and/or (ii) that as a result of the hydrolysis of various non-rubber substances of the latex provoked by microbial growth and/or by enzymes present in the latex, fatty acid anions are liberated that are adsorbed on the surface of the colloidal rubber particles or that may displace proteins adsorbed on the surface of said particles, and that furthermore a decrease of the pH of the latex provoked by the generated acidic compounds reduces the number of carboxyl anions on the surface of the rubber colloidal particles, which in turn reduces the electrostatic repulsion between the colloidal particles and hence reduces the stability of the colloidal latex dispersion; and/or (iii) that the colloidal rubber particles with fatty acid anionic groups adsorbed on their surface interact with calcium and magnesium ions that are present in the latex thus reducing the number of carboxyl anions, which in turn leads to a decrease of the stability of the colloidal dispersion. The decrease of the colloidal stability will eventually lead to the coagulation of the colloidal rubber particles as a result of which the latex dispersion separates into a coagulated rubber phase (mainly containing clots of rubber particles) and an aqueous phase.

Furthermore, microbial infection involving fermentation with the generation of acids, as well as acidic and enzymatic hydrolysis of various substances present in the latex, are also provoking putrefaction. Due to putrefaction, not only bad odours are generated but also acids, which leads to a decrease of the pH of the latex, which in turn leads to a decrease of the colloidal stability of the latex and eventually results in coagulation of the colloidal rubber particles of the latex.

For technical and economical reasons fresh natural rubber latex is mostly concentrated in view of its storing and further handling. Most of the collected fresh natural rubber latex is concentrated by centrifugation and the remainder is concentrated by creaming.

In the centrifugation process, the latex, containing rubber particles which have a density less than the aqueous medium, is subjected to centrifugal forces as a result of which the latex separates into a layer containing mainly the rubber colloidal particles (cream layer) and into an aqueous layer (skim layer). The cream layer is then separated from the skim layer by conventional techniques.

In the creaming process, the latex is allowed to stand for several hours during which, under the effect of gravitational forces, the rubber colloidal particles, having a density less than the aqueous medium, rise to the top of the latex dispersion, forming a cream layer. The cream layer (in short "cream") is than conventionally separated from the lower, aqueous layer (skim), and optionally the cream layer can be subjected to an additional centrifugation step.

As a result of the concentration via centrifugation or via creaming, with an optionally additional centrifugation step, the total solids content of the colloidal latex dispersion constituted by the cream layer is raised from about 30 % w/w to about 60 - 67 % w/w, and its dry rubber content is raised to about 55 - 65 % w/w, typically to about 60 % w/w.

To avoid problems associated with a non-desired coagulation of the natural rubber latex during the collection, pooling, concentration by centrifugation or by creaming, or during bulking and storing of the concentrated latex, as well as to avoid putrefaction, important research efforts have already been made to develop methods for preserving natural rubber latex.

By preserving is meant herein the physico-chemical stabilization of the natural rubber latex against coagulation of the colloidal rubber particles, as well as the stabilization against microbial growth and putrefaction. The above definition also applies to the term preservation and to the generic term stabilization.

Furthermore, often the term bacterial/bacteriological is used in the art instead of the term microbial/ micro-biological (referring i.a. to bacteria, yeasts, and fungi), and these terms are used, also herein, interchangeably. Also the related terms biocide, bactericide, sporocide, biostatica and bacteriostatica are often used in the art, and also herein, interchangeably.

On the one hand various bactericides have been disclosed which at a concentration, depending on the nature of the bactericide, typically ranging from 0.005 % w/w to 5 % w/w on total latex, effectively inhibit bacterial growth in fresh natural rubber latex. Hence the formation of acidic compounds resulting from bacterial activity in the latex is inhibited or even avoided, which in turn inhibits or avoids coagulation.

On the other hand, compounds have been utilised which, by raising the pH of the latex, maintain the acidic functional groups of the compounds adsorbed at the surface of the colloidal rubber particles into the anionic form, thus maintaining electrostatic repulsion between said colloidal particles and hence ensuring physico-chemical stabilization of the colloidal rubber latex dispersion.

Furthermore, methods for the preservation of natural rubber latex have been developed based on a combination of both approaches, namely methods wherein the pH of the latex is increased and also a bactericide is added to the latex.

To stabilize colloidal natural rubber latex dispersions at industrial scale, commonly the pH of the latex is increased. Though alkali hydroxides can be used to do so, much better results are obtained by using ammonia. Ammonia enables to increase in a technically convenient and economical manner the pH to a value of least 8 and higher, thus generating the anionic form of the acidic groups at the surface of the colloidal rubber particles and hence ensuring electrostatic repulsion between said colloidal rubber particles. Furthermore, ammonia also largely neutralizes the undesirable effects of trace metal ions, particularly calcium and magnesium ions, which are normally present in natural rubber latex. In the absence of ammonia, these ions tend to reduce the amount of said acidic groups in the anionic form by forming with them calcium and magnesium salts, hence reducing the stability of the colloidal latex dispersion.

Besides, ammonia has been found to provide a strong bactericidal effect at a level of at least 0.35 % w/w on total latex.

Accordingly, the addition of ammonia has become the most common method to preserve natural rubber latex. Typically, high concentrations of ammonia (minimum about 0.7 % w/w on total latex) are used to prevent coagulation and putrefaction and to ensure long-term preservation of the latex. Natural rubber latex preserved in such manner is commonly named high-ammonia (HA) preservate or HA latex.

However, the use of ammonia also presents several disadvantages, including a gradual fall of the pH of the rubber latex dispersion during storage over a period of time. Accordingly, the use of an excess of ammonia in the beginning of the preservation period or repeated additions of ammonia over the preservation period are required to keep the pH at the desired value over a certain period of time. Furthermore, there are also health hazards associated with the manipulation of ammonia resulting from the inhalation of ammonia vapours and skin contact with concentrated aqueous solutions, for example when ammonia is added to fresh latex as a preservative. A further considerable disadvantage arises from the liberation of ammonia vapours when ammoniated latex is centrifuged or when in the creaming process, the cream is separated from the skim. These vapours are highly irritating, hinder the workers, and may create serious health hazards for people working in the vicinity of the centrifuge or creamer in plants. Furthermore, the ammonia vapours are corrosive and may adversely affect plant equipment and factory buildings.

To overcome or reduce the disadvantages of the utilisation of ammonia at high concentration, several methods to preserve natural rubber latex have already been developed which are based on the use of a reduced amount of ammonia in combination with a bactericide. According to these methods, the concentration of ammonia is typically reduced to about 0.2 % w/w on total latex and at least one bactericide is added at a concentration typically ranging from 0.005 % w/w to about 1 % w/w on total latex. Natural rubber latex preserved in such manner is commonly named low-ammonia (LA) preservate or LA latex.

Typical bactericides include formaldehyde, sodium sulphite, zinc oxide, dialkyldithiocarbamates and tetraalkylthiuram sulphides.

Also variants to the above methods for the preservation of natural rubber latex have already been developed wherein ammonia has been partly or completely substituted by an organic amine or by urea.

GB 1293176 discloses a method for preserving natural rubber latex from coagulation, comprising rising and maintaining the pH of the latex at a value of at least 8, preferably 8.5 to 9.5, by repeated addition thereto of a nitrogenous base, being ammonia or an organic amine, or by a single or repeated addition of urea, or by a combination of both. The preservative is added at a concentration depending on the period the latex has to be kept fluid. The total amount of ammonia that is incrementally added varies from sample to sample and typically ranges from 0.3 % to 0.5 % w/w on total latex. The addition of 0.5 % to 2.0 % w/w on total latex of urea makes further additions of ammonia after an initial pH adjustment unnecessary.

US 5840790 discloses a preservative system for natural rubber latex comprising the addition to natural rubber latex of ammonia or at least one primary aliphatic amine, typically in an amount of 0.1 % to 0.5 % w/w on total latex, and at least one bactericide, such as tetramethylthiuram sulphide [TMTD] or zinc oxide, or a 1:2 to 2:1 mixture of TMTD and zinc oxide in aqueous dispersion, in an amount of 0.02 % to 0.05 % w/w on total latex. Suitable amines include ethanolamine, ethylamine, isopropanolamine, ethylenediamine and diethylenetriamine.

GB 2011933 discloses a method for the preservation of field (fresh) natural rubber latex comprising adding to the latex a non-ionic surfactant having a hydrophilic-lipophilic balance value of at least 12, either alone or in combination with small amounts of ammonia. When used alone, the non-ionic surfactant, being an ethoxylated derivative of a fatty alcohol, of an alkylphenol or of a long-chain alkylamine, is used in an amount of 0.1 % to 3 % w/w on dry rubber content of the latex, corresponding to about 0.03 % to 1 % surfactant on total fresh latex. When used in combination with ammonia in an amount of up to 0.15 % w/w on total latex, the surfactant is used in an amount of 0.1 % to 1 % w/w on dry rubber content, corresponding to about 0.03 % to 0.3 % w/w surfactant on total latex.

So, although several methods have already been developed for the short-term and long-term preservation of fresh natural rubber latex, many of these methods still suffer from one or more disadvantages or drawbacks, such as, for example, a high concentration of ammonia, a high concentration of bactericide, and undesirable effects caused by the bactericide remaining in the rubber on the properties of the shaped rubber articles produced from said rubber.

Accordingly, there still remains a need for improved as well as for alternative methods for the preservation of natural rubber latex which preferably do not suffer from one or more disadvantages presented by prior art methods.

### Object of the invention

One object of the present invention is the provision of an alternative or an improved method for the preservation of natural rubber latex.

A further object is the provision of non-concentrated natural rubber latex as well as concentrated natural rubber latex (cream) preserved from coagulation and putrefaction by said method.

### Description of the invention

Said and other objects have been realised by the present invention, described and claimed below.

During the search for alternative and improved methods for the preservation of natural rubber latex, the inventors surprisingly have found that the addition to fresh natural rubber latex of a small amount of a particular hydrophobically modified saccharide in combination with a small amount of a conventional preservative, significantly increases the physico-chemical stability of the latex (the mechanical stability as well as the colloidal stability), and also increases the stabilization against putrefaction. These findings are the basis of the present invention.

In a first aspect, the present invention relates to a method for the preservation of natural rubber latex which comprises adding to natural rubber latex at least one hydrophobically modified saccharide in combination with at least one conventional preservative. This method for the preservation of natural rubber latex has the advantage that it enables increasing the stability of natural rubber latex by an economically interesting method which does not negatively affect neither subsequent conventional processing of the latex, nor the properties of shaped rubber articles manufactured from the stabilized latex.

By natural rubber latex (abbreviated NR latex) is meant herein rubber latex freshly collected from trees, particularly Hevea trees, as well as non-concentrated pooled NR latex and NR latex that has been concentrated by a conventional technique, but that have not been subjected to a preservation treatment. Natural rubber latex that has been subjected to a preservation treatment is named herein stabilized rubber latex or preserved rubber latex.

By preservation is meant herein the physico-chemical stabilization of the rubber latex against coagulation of the colloidal rubber particles (including the mechanical stabilization, i.e. the stability of the colloidal latex dispersion when it is subjected to mechanical forces, such as centrifugation, as well as the colloidal stabilization, i.e. the stability of the colloidal latex dispersion when it is subjected to chemicals, such as acids, which reduce the electrostatic repulsion and/or steric repulsion between the colloidal particles), as well as the stabilization against microbial growth and putrefaction of the latex (also named microbiological stabilization). This definition also applies to the term stabilization which is used herein interchangeably with the term preservation.

By preservative is meant herein a compound or a composition that stabilizes natural rubber latex by increasing the pH of the latex and/or by providing biocidal, bactericidal, sporocidal, biostatic and bacteriostatic effects to the latex.

According to an embodiment of the invention, a method for the preservation of natural rubber latex is provided which comprises adding to natural rubber latex in total from 0.20 % to 1.50 % w/w of at least one hydrophobically modified saccharide in combination with in total 0.001 % to 0.35 % w/w of at least one conventional preservative (% w/w is percent weight on total latex).

The concentrations of the hydrophobically modified saccharide and the preservative according to the method of the invention are indicated herein on the basis of non-concentrated natural rubber latex.

The preservative is preferably a compound or mixture of two or more compounds, optionally provided in the form of a composition, selected from the group consisting of ammonia, aliphatic amines, particularly primary aliphatic amines, alkanolamines, particularly primary alkanolamines, urea, formaldehyde, sodium sulphite, tetraalkylthiuram disulphides, dialkyldithiocarbamates, and zinc oxide. Preferred preservatives include ammonia, ethylamine, ethyldiamine, diethyltriamine, ethanolamine, isopropanol-amine, urea, tetramethylthiuram disulphide (TMTD), and ammonium, sodium and zinc dimethyldithiocarbamate, and any mixtures thereof.

The hydrophobically modified saccharide suitable according to the present invention is a carbamate, ester or ether of inulin, respectively maltodextrin, defined below.

The hydrophobically modified saccharide suitable in accordance with the present invention is preferably a substituted polymeric saccharide of formula (I):

SAC(-M)ₛ (I)

wherein
- SAC represents:
   - (i) an inulin moiety with a degree of polymerisation (DP) ranging from 3 to 100, or
   - (ii) a starch hydrolysate moiety with a dextrose equivalent (D.E.) value ranging from 2 to 47;
- (-M) represents a hydrophobic moiety, substituting at least one hydrogen atom of a hydroxyl group of SAC, whereby (-M) is selected from the group consisting of:
   - an alkylcarbamoyl radical of formula R¹-NH-CO-,
   - an alkenyl-carbamoyl radical of formula R²-NH-CO-,
   - an alkylcarbonyl radical of formula R¹-CO-,
   - an alkenylcarbonyl radical of formula R²-CO-,
   - an alkyl radical of formula R¹-,
   - an alkenyl radical of formula R²-, and
   - a hydroxyalkyl radical of formula R³-,
   wherein:
   - R¹ represents a linear or branched alkyl group with 4 to 22 carbon atoms,
   - R² represents a linear or branched alkenyl group with 4 to 22 carbon atoms,
   - R³ represents a linear or branched hydroxyalkyl group with 4 to 22 carbon atoms of formula -CHR'-CHOH-R", wherein R' is hydrogen or a linear or branched alkyl radical containing 2 to 20 carbon atoms; and R" is a linear or branched alkyl radical containing 2 to 20 carbon atoms;
- s represents the number of hydrophobic moieties (-M) attached to SAC, expressed as the number average degree of substitution (av. DS) per individual fructosyl and/or glucosyl unit and ranging from 0.01 to 2.0.

In the inulin derivatives and starch hydrolysate derivatives of formula (I), preferably the radical R³- is a 2-hydroxyalkyl group containing 4 to 22 carbon atoms, more preferably the radicals R¹-, R²-, and R³- are, respectively, an alkyl, alkenyl and 2-hydroxyalkyl group containing 6 to 22 carbon atoms, more preferably containing from 6 to 18 carbon atoms, even more preferably containing from 8 to 18 carbon atoms. Preferably said alkyl, alkenyl and 2-hydroxy-alkyl groups are linear groups.

The substituted polymeric saccharide of formula (I) wherein SAC represents an inulin moiety can favourably be derived from inulin by substitution with one or more hydrophobic moieties (-M).

Inulin is well known in the art and concerns saccharide molecules consisting of fructosyl units, mainly bound to one another by β(2→1) fructosyl-fructosyl bounds and possibly having a terminal glucosyl unit. Inulin molecules are generally represented by formula GFₘ and formula F_{m'}, wherein G represents a terminal glucosyl unit, F a fructosyl unit, and m and m' are an integer representing the number of F units in the saccharide molecule, m+1, respectively m', being termed the degree of polymerisation (DP).

The inulin moiety of formula can herein be represented by formula [A]ₙ wherby n is represents the DP. The moiety inulin is derived from inulin having a DP ranging from 3 to 100, which can be inulin of natural origin, namely inulin from a plant or bacterial source, partially hydrolysed inulin from plant or bacterial origin, as well as oligofructose of natural origin and oligofructose produced by enzymatic synthesis. The wording 'derived from' is indicative of the fact that the inulin moieties [A]ₙ are chemically different from inulin as such due to the substitution of at least one hydrogen atom of a hydroxyl group of inulin by (-M). Oligofructose as meant herein is inulin of formula GFₘ and/or F_{m'} with a DP ranging from 2 to 9.

Inulin that is suitable in accordance with the present invention can be homodisperse or polydisperse and can be linear as well as branched, preferably having a degree of branching that is below 25 %, as well as a mixture of linear and branched inulin.

Preferred inulin derivatives of formula (I) are those derived from chicory inulin, being polydisperse inulin with a DP ranging from 3 to about 70 and an av. DP ranging from 10 to 17. Even more preferred are derivatives of formula (I) derived from chicory inulin from which most monomeric and dimeric saccharide side products as well as most inulin molecules with a DP from 3 to 9 have been removed, and which typically has an av. DP ranging from 20 to 30, more typically from 23 to 27.

Commercial grades of inulin, for example available from Orafti, Belgium, are also suitable for the manufacture of the inulin derivatives of formula (I).

The substituted polymeric saccharide of formula (I) wherein the SAC moiety represents a starch hydrolysate moiety - which can herein be repersented by formula [B] - is derived from a starch hydrolysate - preferably having a D.E. from 2 to 47 - by substitution with one or more hydrophobic moieties (-M). Starch hydrolysates are well known in the art. They are prepared by conventional processes, for example by acidic or enzymatic partial hydrolysis, from various starch sources, for example corn, potato, tapioca, rice, sorghum and wheat, and are commercially available in various grades.

Starch hydrolysate molecules have reducing power due to a terminal glucosyl unit. The more the hydrolysis of a given starch has proceeded, the more oligomeric molecules with a terminal glucosyl unit are present in the hydrolysate, and thus the higher the reducing power of the hydrolysate. The reducing power is expressed, on dry product basis, in dextrose equivalent (D.E.), D-glucose having per definition a D.E. of 100. The D.E. value is a measure for the extent of the hydrolysis of the starch and thus also a relative indication of the average molecular weight and the average degree of polymerisation of the polyglucose (saccharide) molecules of the hydrolysate. Starch hydrolysates are usually defined by their D.E. value and sometimes additionally by the source of the starch and/or the method of manufacture of the hydrolysate. Starch hydrolysates range from a product essentially composed of glucose, over products with a D.E. greater than 20 (commonly named glucose syrup), to products with a D.E. of 20 or less (commonly named maltodextrin or dextrin). Starch hydrolysates are commonly composed of a polydisperse mixture of linear or branched polyglucose molecules, or any mixture thereof.

Starch hydrolysates that are suitable for the preparation of the starch hydrolysate moiety of the hydrophobically modified saccharides of formula (I) above, are commercial grade compounds, typically polydisperse mixtures of linear and/or branched polyglucose molecules, having a D.E. ranging from 2 to 47, preferably from 2 to 30, more preferably from 2 to 19. Such starch hydrolysates are commercially available from for example Roquette Frères, France.

Inulin derivatives as well as starch hydrolysate derivatives of formula (I) wherein (-M) represents an alkylcarbamoyl radical of formula R¹-NH-CO-, or an alkenylcarbamoyl radical of formula R²-NH-CO-, wherein R¹ and R² represent a linear or branched alkyl group, respectively alkenyl group, with 4 to 22 carbon atoms, are known in the art, and for example disclosed in W0 99/ 064549 and W0 01/44303. They can be conventionally prepared by reaction of inulin, respectively a starch hydrolysate, with an alkylisocyanate or alkenylisocyanate of respectively formula R¹-N=C=O and R²-N=C=O wherein R¹ and R² have the meanings defined above.

A typically suitable inulin derivative of formula (I) is for example inulin laurylcarbamate which is commercially available as Inutec® SP1 (trade name) from Orafti, Belgium.

A typically suitable starch hydrolysate derivative of formula (I) is for example a carbamate derived from a starch hydrolysate having a D.E. value from 2 to 19 wherein the R¹ alkylgroup of the alkylcarbamoyl radical or the R² alkenyl group of the alkenylcarbamoyl radical is a linear group containing from 8 to 18 carbon atoms.

Inulin derivatives and starch hydrolysate derivatives of formula (I) wherein (-M) represents an alkylcarbonyl radical of formula R¹-CO- or an alkenylcarbonyl radical of formula R²-CO-, wherein R¹ and R² represent a linear or branched alkyl, respectively alkenyl group with 4 to 22 carbon atoms, are known in the art and can be prepared by conventional esterification reactions, for example by reaction of inulin, respectively a starch hydrolysate, with an anhydride of formula R⁴-CO-O-CO-R⁴ or R⁴-COO-CO-CH₃, or an acid chloride of formula R⁴-CO-Cl (wherein R⁴ represents respectively a radical R¹ or R² having the meanings given above). Such esterification reactions, inulin derivatives and starch hydrolysate derivatives, are for example disclosed in EP 0792888, EP 0703243, GB 601374, GB 806935 and JP 3-197409.

Inulin derivatives and starch hydrolysate derivatives of formula (I) wherein (-M) represents an alkyl radical of formula R¹-, or a 2-hydroxyalkyl or an alkenyl radical of formula R², R¹ and R² being defined above, are known in the art. They can be prepared by conventional etherification or alkylation reactions, for example by reaction, in the presence of a base, of inulin, respectively a starch hydrolysate, with an alkyl halide of formula R¹-X, or an alkenyl halide of formula R²-X, or an alkyl sulphate of formula R¹-O-SO₂-0-R¹, or an alkenyl sulphate of formula R²-O-SO₂-O-R², wherein R¹ and R² have the meanings defined above and X represents a chloride, bromide or iodide anion, or an other leaving group. Such alkylation reactions, said inulin derivatives and starch hydrolysate derivatives are disclosed in for example GB 601374 and GB 806935.

Inulin derivatives and starch hydrolysate derivatives of formula (I) wherein (-M) represents a hydroxyalkyl radical, preferably a 2-hydroxyalkyl radical, of formula R³ (R³ being defined above), are also known in the art and can be conventionally prepared, for example by reaction of inulin, respectively a starch hydrolysate, in the presence of an alkaline catalyst, with a linear or branched epoxyalkane, preferably a 1,2-epoxyalkane containing from 4 to 22 carbon atoms, as for example disclosed in EP 0638589, GB 601374 and US 4585858.

The saccharide moieties of the inulin and starch hydrolysate derivatives according to formula (I), can be substituted by one or more alkylcarbamoyl moieties of formula R¹-NH-CO-, alkenylcarbamoyl moieties of formula R²-NH-CO-, alkylcarbonyl moieties of formula R¹-CO-, alkenylcarbonyl moieties of formula R²-CO-, alkyl moieties of formula R¹-, alkenyl moieties of formula R²-, or hydroxyalkyl moieties of formula R³ (R¹, R² and R³ being defined above), in which all R¹ groups, respectively all R² and all R³ groups, can be the same or different, or by any combination thereof.

The av. DS of the derivatives of formula (I) may range from 0.01 to 2, and preferably ranges from 0.02 to 1.0, more preferably from 0.05 to 0.5, most preferably from 0.1 to 0.3.

Typical examples of hydrophobically modified saccharides of formula (I) that are suitable in accordance with the present invention are listed in Table 1 below.

**Table 1: Hydrophobically modified saccharides of formula (I)**

| | | | | | | |
|---|---|---|---|---|---|---|
| | | | | | | |

| Nr. | Lab ref. | SAC moiety | Type | Hydrophobic Moiety | | av. DS |
|---|---|---|---|---|---|---|
| | | | | M | R- | |
| 1 | MP 79 | [A]ₙ | a | R-NH-CO | CH₃(CH₂)₇- | 0.02 |
| 2 | AM 150 | [A]ₙ | a | R-NH-CO | CH₃(CH₂)₇- | 0.08 |
| 3 | AM 149 | [A]ₙ | a | R-NH-CO | CH₃(CH₂)₇- | 0.09 |
| 4 | AM 154 | [A]ₙ | a | R-NH-CO | CH₃(CH₂)₇- | 0.2 |
| 5 | AM 238 | [A]ₙ | a | R-NH-CO | CH₃(CH₂)₁₁- | 0.07 |
| 6 | AM 219 | [A]ₙ | a | R-NH-CO | CH₃(CH₂)11- | 0.09 |
| 7 | AM 259 | [A]ₙ | a | R-NH-CO | CH₃(CH₂)₁₁- | 0.1 |
| 8 | MP 28 | [A]ₙ | a | R-NH-CO | CH₃(CH₂)₁₁- | 0.1 |
| 9 | MP 73 | [A]ₙ | a | R-NH-CO | CH₃(CH₂)₁₁- | 0.1 |
| 10 | MP 66b | [A]ₙ | a | R-NH-CO | CH₃(CH₂)₁₁- | 0.12 |
| 11 | AM 220b | [A]ₙ | a | R-NH-CO | CH₃(CH₂)₁₁- | 0.15 |
| 12 | AM 82 | [A]ₙ | a | R-NH-CO | CH₃(CH₂)11- | 0.21 |
| 13 | MP 20 | [A]ₙ | a | R-NH-CO | CH₃(CH₂)₁₁- | 0.3 |
| 14 | MP 32 | [A]ₙ | a | R-NH-CO | CH₃(CH₂)₁₅- | 0.21 |
| 15 | MP 78 | [A]ₙ | a | R-NH-CO | CH₃(CH₂)₁₇- | 0.023 |
| 16 | AM 22 | [A]ₙ | a | R-NH-CO | CH₃(CH₂)₁₇- | 0.054 |
| 17 | MP 80 | [A]ₙ | a | R-NH-CO | CH₃(CH₂)₁₇- | 0.11 |
| 18 | AM 244 | [A]ₙ | b | R-NH-CO | CH₃(CH₂)₁₁- | 0.3 |
| 19 | MP 36 | [A]ₙ | a | R-CO | CH₃(CH₂)₁₀- | 0.12 |
| 20 | MP 41 | [A]ₙ | a | R-CO | CH₃(CH₂)₁₄- | 0.1 |
| 21 | MP 40 | [A]ₙ | a | R-CO | CH₃(CH₂)₇CH=CH-(CH₂)₇- | 0.05 |
| 22 | MP 42 | [A]ₙ | a | R-CO | CH₃(CH₂)₁₆- | 0.11 |
| 23 | AM 141 | [B] | d | R-NH-CO | CH₃(CH₂)₁₁- | 0.05 |
| 24 | AM 117 | [B] | e | R-NH-CO | CH₃(CH₂)₁₁- | 0.1 |
| 25 | PC 17 | [B] | c | R-NH-CO | CH₃(CH₂)₁₁- | 0.1 |
| 26 | PC 16 | [B] | d | R-NH-CO | CH₃(CH₂)₁₁- | 0.18 |
| 27 | MP 98 | [B] | d | R-CO | CH₃(CH₂)₁₀- | 0.1 |
| 28 | AM 70 | [A]ₙ | a | R-NH-CO | CH₃(CH₂)₇- | 0.11 |
| 29 | MP 31 | [A]ₙ | a | R-NH-CO | CH₃(CH₂)₁₅- | 0.12 |
| 30 | MP 92B | [A]ₙ | f | R-NH-CO | CH₃(CH₂)₁₁- | 0.19 |
| 31 | MP 102 | [A]ₙ | f | R-NH-CO | CH₃(CH₂)₁₁- | 0.13 |

### Legend to Table 1

a = Inulin, av. DP 23 (RAFTILINE^{®} HP, ORAFTI, Belgium)
b = Inulin, DP mainly between 2 and 8, av. DP about 4.5 (RAFTILOSE^{®} P95, ORAFTI, Belgium)
c = Maltodextrin, DE 2 (Roquette, France)
d = Maltodextrin, DE 28 (Roquette, France)
e = Maltodextrin, DE 47 (Roquette, France)
f = Inulin, av. DP 13 (RAFTILINE^{®} ST, ORAFTI, Belgium)

The hydrophobically modified saccharides of formula (I) are disclosed to present tensio-active properties and to be useful as surfactant for the preparation of dispersions containing a continuous aqueous phase and a dispersed oil phase or a finely divided solid phase, for example in WO 99/64549, WO 01/44303, WO 03/031043, EP 0792888, and EP 0638589. However, the prior art is absolutely silent about the suitability and use of hydrophobically modified saccharides of formula (I), either taken alone or in combination with a preservative, for the stabilization of natural rubber latex.

The method of use according to the invention is typically carried out by adding to natural rubber latex, typically to freshly collected or freshly collected and pooled natural rubber latex (fresh herein meaning within 3 hours, preferably within 1 hour, from the collection), an amount of a hydrophobically modified saccharide of formula (I) defined above ranging from 0.20 % to 1.50 % w/w on total amount of latex, optionally present in an aqueous medium, in combination with 0.001 % to 0.35 % w/w of a conventional preservative (% w/w is percent weight on total latex), usually from 0.15 to 0.35 % w/w ammonia, typically about 0.2 % w/w ammonia, while the mixture is stirred, or stirred subsequently, to ensure homogenisation. The saccharide derivative of formula (I) and the preservative may be added simultaneously or subsequently, the order of addition in the latter variant being not critical.

Preferably the amount of modified saccharide of formula (I) used in said method ranges from 0.25 % to 1.25, more preferably from 0.25 % to 1.0 % w/w on total amount of latex, in combination with an amount of preservative ranging from 0.001 % to 0.35 % w/w on total amount of latex, preferably from 0.01 % to 0.35 % w/w, more preferably from 0.10 % to 0.35 %, even more preferably from 0.15 % to 0.35 % w/w.

Alternatively, the rubber latex flowing from the cuts in the trees is collected or pooled in a container already containing a said combination of a saccharide derivative of formula (I) and a preservative in aqueous medium, the mixture is stirred to ensure homogenisation, or the container may contain already one component of said combination and is then subsequently treated with the required amount of the second component.

In a further variant, the method of use according to the present invention, comprises the addition to natural rubber latex of two or more derivatives of formula (I) and/or two or more preservatives to stabilize the natural rubber latex, with the understanding that the sum of the amounts of respectively the derivatives of formula (I) and of the preservatives have to comply with the respective total amounts indicated above, being respectively from 0.20 % to 1.50 % w/w and from 0.001 % to 0.35 %.

In still a further variant, natural rubber latex or pooled natural rubber latex that first has been stabilized by addition of an amount of ammonia of 0.35 % w/w or more on total latex, may be conventionally deammoniated, for example by blowing air onto the surface of the latex, to an ammonia concentration of 0.35 % w/w or less, typically 0.2 % w/w, and then treated with 0.20 % to 1.50 % w/w (% w/w on total amount of latex) of a hydrophobically modified saccharide of formula (I), optionally in solid form (for example in spray-dried powder form) or in the form of a suspension (for example in suspension in aqueous medium), under stirring of the mixture to ensure homogenisation.

The invention is illustrated by the following examples without being limited thereto.

### Example 1

The mechanical stability of natural rubber latex treated by the method of the invention is tested according to ISO 35 procedure by subjecting the required amount of latex mixture stabilized by 0.2 % w/w ammonia and by an amount from 0.25 % to 1.0 % w/w of Inutec^{®} SP1 (Trade mark of Orafti, Belgium for inulin laurylcarbamate) to centrifugal forces, and measuring the time the dispersion remains stable (indicated as Mechanical Stability Time (MST), expressed in seconds). The end point of the stability is indicated by the first appearance of flocculum. The results are indicated in Table 2 below.

**Table 2: Mechanical stability of preserved rubber latex**

| LA Latex⁽¹⁾ + %w/w SP1⁽²⁾ | Storage time (weeks) | | | | |
|---|---|---|---|---|---|
| | 2 | 4 | 6 | 8 | 16 |
| | Mechanical Stability Time (MST)(in seconds)⁽³⁾ | | | | |
| LA + 0.00* | 1350 | 1500 | 1591 | 1604 | 1453 |
| LA + 0.25 | 2020 | 2018 | 1862 | 1941 | 1670 |
| LA + 0.50 | 2133 | 2317 | 2189 | 2276 | 1723 |
| LA + 0.75 | 2850 | 2849 | 2850 | 2865 | 1998 |
| LA + 1.0 | 3600 | 3600 | 3600 | 3600 | 2480 |

| | | | | | |
|---|---|---|---|---|---|
| Legend to Table 2 (1) LA latex: natural rubber latex treated with 0.2 % w/w ammonia (2) SP1: Inutec^{®} SP1(trade name of Orafti, Belgium, for inulin laurylcarbamate) (3) MST in seconds at 14,000 rpm in a centrifuge according to ISO 35 *: comparative experiment | | | | | |

### Example 2

As indicated above, microbial infection of natural rubber latex results in the formation of acidic compounds, particularly volatile fatty acids (VFA's), and an increase of VFA's in the latex obviously indicates a decline in the colloidal stability of the latex dispersion.

In order to assess the colloidal stability of rubber latex, a test is used in the art according to which the evolution of the concentration of volatile fatty acids (expressed as volatile fatty acid number (VFA No)) in a rubber latex is determined as a function of time. VFA No is defined as the number in grams of potassium hydroxide equivalent to the anions present as salts of steam-volatile acids in a quantity of latex which contains 100 g of total solids. The lower the VFA No, the more stable the dispersion.

In example 2, the colloidal stability of natural rubber latex stabilized by the method of the invention is tested according to ISO 506 procedure, by measuring on the required amount of latex stabilized by 0.2 % w/w ammonia and by an amount ranging from 0.25 % to 1.0 % w/w of Inutec® SP1 (Trade mark of Orafti, Belgium, for inulin lauryl-carbamate), the evolution of the VFA number in function of the time and of the concentration of the hydrophobically modified saccharide of formula (I). The results are indicated in Table 3 below.

**Table 3: Colloidal stability of preserved rubber latex**

| LA Latex⁽¹⁾ + %w/w SP1⁽²⁾ | Storage time (weeks) | | | | |
|---|---|---|---|---|---|
| | 2 | 4 | 6 | 8 | 16 |
| | Volatile fatty acid number (VFA No)⁽³⁾ | | | | |
| LA + 0.00 * | 0.058 | 0.058 | 0.070 | 0.085 | 0.140 |
| LA + 0.25 | 0.057 | 0.063 | 0.071 | 0.083 | 0.110 |
| LA + 0.50 | 0.057 | 0.065 | 0.076 | 0.091 | 0.118 |
| LA + 0.75 | 0.062 | 0.065 | 0.080 | 0.100 | 0.124 |
| LA + 1.0 | 0.065 | 0.075 | 0.075 | 0.088 | 0.126 |

| | | | | | |
|---|---|---|---|---|---|
| Legend to Table 3 (1) LA latex: natural rubber latex treated with 0.2 % w/w ammonia (2) SP1: Inutec^{®} SP1 (trade name of Orafti, Belgium, for inulin laurylcarbamate) (3) VFA No according to ISO 506 procedure *: Comparative experiment | | | | | |

The data of Table 2 regarding the mechanical stability and of Table 3 regarding the colloidal stability clearly show the significantly stabilizing effect of the method of use of the present invention on a natural rubber latex dispersion as well as the direct dependency of said stabilizing effect on the concentration of the modified saccharide of formula (I).

The preserved rubber latex obtained by the method of the invention presents a good stability, namely a stability enabling the concentration of the latex by centrifugation or by creaming optionally followed by a centrifugation, without coagulation of the latex during these process steps. Furthermore, the concentrated latex remains stable, presenting neither coagulation nor putrefaction, during storage for a period of at least 20 weeks. The data also show, as is understood by the skilled person, that in case stability of the latex for only a shorter storage period is required, the concentration of the saccharide derivative of formula(I)and/or of the preservative can be decreased and adapted to the needs.

Furthermore, the stabilization of natural rubber latex by the method of the present invention does neither negatively affect subsequent processing of the preserved latex or the concentrated preserved latex, nor the quality and properties of shaped rubber articles manufactured from the stabilized latex.

## Claims

1. A method for the preservation of natural rubber latex, **characterised in that** it comprises adding to natural rubber latex in total from 0.20 % to 1.50 % w/w on total non-concentrated latex of at least one hydrophobically modified saccharide in combination with in total 0.001 % to 0.35 % w/w of at least one conventional preservative, wherein the hydrophobically modified saccharide is a substituted polymeric saccharide of formula (I)
SAC(-M)ₛ (I)
wherein
• SAC represents:
- (i) an inulin moiety with a degree of polymerisation (DP) ranging from 3 to 100, or
- (ii) a starch hydrolysate moiety with a dextrose equivalent (D.E.) value ranging from 2 to 47,
• (-M) represents a hydrophobic moiety, substituting at least one hydrogen atom of a hydroxyl group of S_{AC}, whereby (-M) is selected from the group consisting of:
- an alkylcarbamoyl radical of formula R¹-NH-CO-,
- an alkenyl-carbamoyl radical of formula R²-NH-CO-,
- an alkylcarbonyl radical of formula R¹-CO-,
- an alkenylcarbonyl radical of formula R²-CO-,
- an alkyl radical of formula R¹-,
- an alkenyl radical of formula R²-, and
- a hydroxyalkyl radical of formula R³-,
wherein:
- R¹ represents a linear or branched alkyl group with 4 to 22 carbon atoms,
- R² represents a linear or branched alkenyl group with 4 to 22 carbon atoms,
- R³ represents a linear or branched hydroxyalkyl group with 4 to 22 carbon atoms of formula -CHR'-CHOH-R", wherein R' is hydrogen or a linear or branched alkyl radical containing 2 to 20 carbon atoms; and R" is a linear or branched alkyl radical containing 2 to 20 carbon atoms;
• s represents the number of hydrophobic moieties (-M) attached to SAC, expressed as the number average degree of substitution (av. DS) per individual fructosyl and/or glucosyl unit and ranging from 0.01 to 2.0.

2. The method according to claim 1, wherein in formula (I) SAC represents an inulin moiety.

3. The method according to claim 1, wherein in formula (I) SAC represents an inulin moiety derived from chicory inulin with a degree of polymerisation (DP) ranging from 3 to 70, preferably with an average degree of polymerisation (av.DP) ranging from 20 to 30.

4. The method according to claim 1 wherein in formula (I) SAC represents a starch hydrolysate moiety.

5. The method according to claim 1 wherein in formula (I) SAC represents a starch hydrolysate moiety derived from a starch hydrolysate with a dextrose equivalent (D.E.) value ranging from 2 to less than 20.

6. The method according to claim 1 wherein in formula (I) SAC represents a starch hydrolysate moiety derived from a starch hydrolysate with a dextrose equivalent (D.E.) value ranging from 20 to 47.

7. The method according to any one of claims 1 or 6 wherein the hydrophobic moiety in formula (I) is an alkylcarbamoyl radical of formula R¹-NH-CO- or an alkenylcarbamoyl radical of formula R²-NH-CO-, wherein R¹ represents a linear or branched alkyl group with 4 to 22 carbon atoms and R² represents a linear or branched alkenyl group with 4 to 22 carbon atoms.

8. The method according to any one of claims 1 to 6 wherein the hydrophobic moiety in formula (I) is an alkylcarbonyl radical of formula R¹-CO- or an alkenyl-carbonyl radical of formula R²-CO-, wherein R¹ represents a linear or branched alkyl group with 4 to 22 carbon atoms and R² represents a linear or branched alkenyl group with 4 to 22 carbon atoms.

9. The method according to any one of claim 1 to 6 wherein the hydrophobic moiety in formula (I) is a an alkyl radical of formula R¹- or an hydroxyalkyl radical of formula R³-, wherein R¹ represents a linear or branched alkyl group with 4 to 22 carbon atoms and R³ represents a linear or branched hydroxyalkyl group with 4 to 22 carbon atoms of formula -CHR'-CHOH-R", wherein R' is hydrogen or a linear or branched alkyl radical and R" is a linear or branched alkyl radical.

10. The method according to claim 1 wherein in formula (I) SAC represents an inulin moiety with an average degree of polymerisation (av.DP) ranging from 20 to 27 and the hydrophobic moiety is an alkylcarbamoyl radical of formula R¹-NH-CO- or an alkenylcarbamoyl radical of formula R²-NH-CO-, wherein R¹ represents a linear or branched alkyl group with 6 to 18 carbon atoms and R² represents a linear or branched alkenyl group with 6 to 18 carbon atoms.

11. The method according to claim 1 wherein in formula (I) SAC represents a starch hydrolysate moiety with a D.E. value ranging from 2 to less than 20 and the hydrophobic moiety is an alkylcarbamoyl radical of formula R¹-NH-CO- or an alkenylcarbamoyl radical of formula R²-NH-CO-, wherein R¹ represents a linear or branched alkyl group with 6 to 18 carbon atoms and R² represents a linear or branched alkenyl group with 6 to 18 carbon atoms.

12. The method according to claim 1 wherein in formula (I) SAC represents an inulin moiety and the hydrophobic moiety is an alkylcarbonyl radical of formula R¹-CO- or an alkenyl-carbonyl radical of formula R²-CO-, wherein R¹ represents a linear or branched alkyl group with 4 to 22 carbon atoms, R² represents a linear or branched alkenyl group with 4 to 22 carbon atoms.

13. The method according to claim 1 wherein in formula (I) SAC represents an inulin moiety and the hydrophobic moiety is an alkyl radical of formula R¹-, wherein R¹ represents a linear or branched alkyl group with 4 to 22 carbon atoms, or an hydroxyalkyl radical of formula R³-wherein R³ represents a linear or branched hydroxyalkyl group with 4 to 22 carbon atoms.

14. The method according to claim 1, wherein the hydrophobically modified saccharide of formula (I) has a number average degree of substitution (av. DS) ranges from 0.02 to 1.0.

15. The method according to claim 1, wherein the hydrophobically modified saccharide of formula (I) has a number average degree of substitution (av. DS) ranges from 0.05 to 0.5.

16. The method according to any one of the preceding claims wherein the preservative comprises a compound or a mixture of two or more compounds selected from the group consisting of ammonia, aliphatic amines, alkanolamines, urea, formaldehyde, sodium sulphite, tetraalkylthiuram disulphides, dialkyldithiocarbamates, and zinc oxide, and any mixtures thereof.

17. The method according claim 16 wherein the aliphatic amine is a primary aliphatic amine and/or the alkanolamine is a primary alkanolamine.

18. The method according to claim 16 wherein the preservative comprises a compound or a mixture of two or more compounds selected from the group consisting of ammonia, ethylamine, ethyldiamine, diethyltriamine, ethanolamine, isopropanolamine, urea, tetramethylthiuram disulphide, ammonium dimethyldithiocarbamate, sodium dimethyldithio-carbamate and zinc dimethyldithiocarbamate, and any mixtures thereof.

19. The method according to any one of the preceding claims wherein the preservative is ammonia at a concentration of 0.15 % to 0.35 % w/w on total latex.

20. Preserved rubber latex, **characterised in that** it contains in total from 0.20 % to 1.50 % w/w of at least one hydrophobically modified saccharide of formula (I) defined in claim 1 in combination with in total 0.001 % to 0.35 % w/w of at least one conventional preservative.

21. Preserved rubber latex according to claim 20, wherein in the hydrophobically modified saccharide of formula (I) defined in claim 1, SAC represents an inulin moiety.

22. Preserved rubber latex according to claim 20, wherein the hydrophobically modified saccharide of formula (I) is according to any one of claims 2, 3, 7, 8, 9, 10, 12, 13, 14, or 15

23. Preserved rubber latex according to claim 20, wherein wherein the hydrophobically modified saccharide of formula (I) is according to any one of claims 4, 5, 6, 11, 14, or 15.

24. Preserved rubber latex according to any one of claims 20 - 23, **characterised** that it is in a non-concentrated form, having a content of 20% to 40% w/w dry rubber on total latex.

25. Preserved rubber latex according to claim 24, **characterised** that it is in concentrated form, having a content of 55 % to 65 % w/w dry rubber on total latex.

26. Preserved rubber latex either in non-concentrated form or in concentrated form, **characterised in that** it is obtained from natural rubber latex by a method defined in any one of claims 1 to 19.
